# EUROPÄISCHE PATENTSCHRIFT

(11) **EP 4 196 697 B1**
(45) Veröffentlichungstag und Bekanntmachung des Hinweises auf die Patenterteilung: **01.07.2026**
(21) Anmeldenummer: 21749610.8
(22) Anmeldetag: 27.07.2021
(51) Int. Cl.: F16H 3/093, F16H 37/04

(54) **LASTSCHALTGETRIEBE UND FAHRZEUG**
BOÎTE DE VITESSES À PASSAGE SOUS CHARGE ET VÉHICULE
BOÎTE DE VITESSES COMMANDÉE EN CHARGE ET VÉHICULE

(30) Priorität: 12.08.2020 DE 102020121209
(43) Veröffentlichungstag der Anmeldung: 21.06.2023
(73) Patentinhaber: Deere & Company, Moline, IL 61265 (US)
(72) Erfinder: RAISCH, Stefan, 68163 Mannheim (DE); ORE, Thomas, G, 68163 Mannheim (DE)
(74) Vertreter: Stein, Stefan
(86) Internationale Anmeldenummer: PCT/EP2021/070926
(87) Internationale Veröffentlichungsnummer: WO 2022/033860

(56) Entgegenhaltungen:
- EP-A1- 0 713 033
- JP-A- S58 163 849
- US-A- 4 549 443
- US-A1- 2003 136 208

## Beschreibung

Die vorliegende Erfindung betrifft ein Lastschaltgetriebe für ein Fahrzeug, insbesondere ein landwirtschaftliches oder industrielles Arbeitsfahrzeug, mit wenigstens zwei achsparallelen Getriebewellen, die zur Realisierung von Übersetzungsstufen jeweils Zahnräder und Schaltelemente tragen, wobei die Übersetzungsstufen drei Gruppen und zumindest zwei Gänge umfassen, und ein Fahrzeug, insbesondere ein landwirtschaftliches oder industrielles Arbeitsfahrzeug, mit einem Lastschaltgetriebe.

Lastschaltgetriebe sind bekannt. Sie werden beispielsweise an Fahrzeugen, insbesondere an Arbeitsfahrzeugen, wie sie in der Landwirtschaft, Industrie und im Baugewerbe Verwendung finden, eingesetzt. Moderne Traktoren bzw. landwirtschaftliche Arbeitsfahrzeuge, besonders solche mit hoher Leistung, erfordern sowohl Wirtschaftlichkeit als auch einen angemessenen Schaltkomfort. Daher sind voll unter Last schaltbare Getriebe, kurz Lastschaltgetriebe (englisch: power shift transmission oder PST) genannt, gute Alternativen zu teilweise unter Last schaltbaren Getrieben oder stufenlosen Getrieben. Derartige Lastschaltgetriebe weisen üblicherweise mehre Schaltbereiche auf.

Es ist üblich, derartige Lastschaltgetriebe mit auf parallelen Achsen angeordneten Zahnrädern und Lamellenkupplungen zu versehen, um eine bestimmte Anzahl von Übersetzungen ohne Kraftunterbrechung schalten zu können. Ein derartiges Getriebe wird an großen John Deere Traktoren als e23 Getriebe eingesetzt und weist mit dem zuvor beschriebenen Aufbau eine 2x4x3 Kombination von Vorwärtsgängen plus Rückwärtsgängen auf. Ein derartiges Getriebe wird in der US-A1-2012048043 gezeigt. Dieser Aufbau stellt eine ausreichend große Anzahl von Geschwindigkeiten sowohl im Vorwärtsals auch im Rückwärtsgang unter Einsatz einer möglichst geringen Anzahl von Stücknummern, Kosten, Gewicht und Lagerplatz zur Verfügung. Der "Gruppen"-Bereich des Getriebes ist allerdings verhältnismäßig groß und schwer. Sowohl die A-Gruppe als auch die C-Gruppe erfordern eine sehr große Dimensionierung ihrer Bauteile aufgrund des ziemlich großen Übersetzungsbereichs, den der Gruppenbereich zur Verfügung stellen muss. Die Gruppen weisen eine Spreizung von etwa 9, die A- und die C-Gruppe jeweils eine Übersetzung von etwa 3, die A-Gruppe ins Langsame, die C-Gruppe ins Schnelle auf. Die mittlere bzw. B-Gruppe weist wiederum eine Übersetzung von etwa 1 auf. Das Ausgangszahnrad der A-Gruppe bzw. das Eingangszahnrads der C-Gruppe sind damit etwa dreimal so groß wie das entsprechende Eingangs- bzw. Ausgangszahnrad der jeweiligen Gruppe. Die minimal notwendige Größe der beiden kleinen Zahnräder wird dadurch bestimmt, dass diese auf entsprechenden Wellen aufgenommen werden müssen. Der dadurch notwendige Durchmesser der kleinen Zahnräder macht wiederum einen sehr großen Außendurchmesser der beiden großen Zahnräder erforderlich, wodurch diese ein relativ hohes Gewicht als auch ein relativ großes Massenträgheitsmoment aufweisen.

Darüber hinaus ist von John Deere ein Lastschaltgetriebe unter der Bezeichnung 16 PST bekannt. Ein derartiges Getriebe wird in der US-A-5117702 gezeigt. Die A-Gruppe dieses Lastschaltgetriebes weist ein Planetengetriebe auf, wobei das Sonnenrad des Planetengetriebes mit einem Ausgangszahnrad der C-Gruppe verbunden ist. Das Hohlrad des Planetengetriebes ist mit einer Lamellenbremse, das heißt einer Lamellenkupplung, die mit einem Getriebegehäuse verbunden ist, und der Planetenradträger des Planetengetriebes direkt mit der Ausgangswelle verbunden. Dieses Getriebe erfordert trotz seiner nur 4 Vorwärtsgänge und 4 Gruppen und seiner damit relativ geringen Anzahl von nur 16 Übersetzungen für die Vorwärtsfahrt und 1x4 Rückwärtsgängen eine verhältnismäßig große Dimensionierung und ist wenig kompakt. US-A-4549443 und US-B2-6988426 offenbaren weitere Lastschaltgetriebe für landwirtschaftliche Fahrzeuge.

Die der Erfindung zugrunde liegende Aufgabe wird daher darin gesehen, ein Lastschaltgetriebe und ein Fahrzeug vorzusehen, durch welche die vorgenannten Nachteile überwunden werden.

Die Aufgabe wird erfindungsgemäß durch die Lehre der Patentansprüche 1 bzw. 11 gelöst. Weitere vorteilhafte Ausgestaltungen und Weiterbildungen der Erfindung gehen aus den Unteransprüchen hervor. Diesbezüglich weist ein Lastschaltgetriebe für ein Fahrzeug, insbesondere ein landwirtschaftliches oder industrielles Arbeitsfahrzeug, wenigstens zwei achsparallele Getriebewellen auf, die zur Realisierung von Übersetzungsstufen jeweils Zahnräder und Schaltelemente tragen. Die Übersetzungsstufen umfassen drei Gruppen und zumindest zwei Gänge. Eine erste und eine zweite Gruppe weisen eine betragsmäßig zumindest annähernd gleiche Übersetzung auf, wobei die erste Gruppe ins Schnelle und die zweite Gruppe ins Langsame übersetzt ist. Die dritte Gruppe weist eine die Übersetzung der ersten beiden Gruppen deutlich übersteigende Übersetzung auf, die mehrstufig umgesetzt wird. Die mehreren achsparallelen Getriebewellen umfassen eine Eingangs- und eine Ausgangswelle und eine erste und zweite Zwischenwelle. Ausserdem weist die dritte Gruppe ein Planetengetriebe auf, derart, dass sich die Übersetzung der dritten Gruppe aus einer Kombination der Übersetzung der ersten Gruppe mit der Übersetzung des Planetengetriebes ergibt, wobei die erste Gruppe und die dritte Gruppe ein gemeinsames frei drehbar auf der Ausgangswelle angeordnetes Zahnrad aufweisen. Das frei drehbar auf der Ausgangswelle angeordnete Zahnrad ist mit einem Sonnenrad des darüber hinaus ein stationäres Hohlrad und einen Planetenträger aufweisenden Planetengetriebes drehfest verbunden. Die Schaltelemente zur Auswahl der Gruppe sind auf der Ausgangswelle angeordnet, wobei das frei drehbar auf der Ausgangswelle angeordnete Zahnrad mit der Ausgangswelle selektiv über ein Schaltelement der ersten Gruppe oder ein Schaltelement der dritten Gruppe drehfest verbindbar ist. Durch die gleichmäßige Verteilung der ersten und der zweiten Gruppe ergibt sich eine deutlich vorteilhafte, üblicherweise verhältnismäßig kleine Zahnradgröße der zweiten Gruppe. Darüber hinaus sind die ähnlichen Übersetzungsverhältnisse der ersten und der zweiten Gruppe günstig, da mit ähnlichen Größenordnungen im selben Getriebe besser umgegangen werden kann und möglicherweise sogar gewisse technische Features (z.B. Lager, Steckverzahnungen, etc.) übernommen können. Dies vereinfacht den Aufbau des Lastschaltgetriebes und kann dazu beitragen Stücknummern einzusparen. Da die dritte Gruppe eine die Übersetzung der ersten beiden Gruppen deutlich übersteigende Übersetzung aufweist, lässt sich nach wie vor eine möglichst große Spreizung des Gesamtgetriebes erzielen. Durch eine mehrstufige Umsetzung der Übersetzung ergibt sich auch für die dritte Gruppe ein angenehmes Übersetzungsverhältnis. Die Übersetzung kann in einfacher Art und Weise beispielsweise zweistufig realisiert werden. Durch einen derartigen Aufbau kann der Durchmesser und/oder die Zähnezahl der einzelnen Zahnräder klein gehalten werden, wodurch beispielsweise ein geringerer Abstand der Getriebewellen vorgesehen und/oder die Baugröße des Lastschaltgetriebes klein bzw. kompakt gehalten werden kann. So kann ein Lastschaltgetriebe mit einer möglichst großen Anzahl von Übersetzungsstufen auf kleinem Bauraum untergebracht bzw. mit reduzierter Baugröße bzw. reduziertem Gewicht realisiert werden.

Eine besonders vorteilhafte Auslegung des Lastschaltgetriebes ergibt sich, wenn die Gruppen eine Spreizung von zumindest annähernd 9 aufweisen und/oder die erste und die zweite Gruppe eine Übersetzung von jeweils etwa 1,7 bzw. eine Spreizung von etwa 3 und/oder die dritte Gruppe eine Übersetzung von etwa 5,1 aufweist. Eine einzelne Übersetzung von 5,1 innerhalb einer Verzahnungsstufe wäre weniger angenehm und würde einen großen Bauraum, insbesondere deutlich größere Achsabstände erfordern. Derartige Nachteilen wird durch das Vorsehen hintereinandergeschalteter Übersetzungen im Bereich der dritten Gruppe vorgebeugt.

Vorteilhafterweise sind vier Gänge und/oder darüber hinaus zwei Schaltstufen und/oder ein Rückwärtsfahrtmodus vorgesehen. Zusammen mit den drei Gruppen können sich auf diese Weise vorzugsweise bis zu 24 Vorwärts- und 12 Rückwärtsgänge ergeben. Zur Verbesserung des Schaltkomforts finden üblicherweise aber nur 23 Vorwärtsgänge Verwendung.

Vorzugsweise ist wenigstens eine Eingangs- und eine Ausgangswelle vorgesehen. Auf diesen können jeweils Zahnräder bzw. Schaltelemente vorgesehen sein. Die Eingangswelle kann von einem Motor des Fahrzeugs angetrieben bzw. zur Weitergabe eines Drehmoments in Rotation versetzt werden. Die Ausgangswelle wiederum kann mit den Rädern und/oder weiteren Funktionsgruppen des Fahrzeugs in Verbindung stehen, um diese anzutreiben bzw. an diese ein Drehmoment weiterzugeben. Die Ausgangswelle kann so beispielsweise Räder eines Fahrzeugs und/oder auch eine oder mehrere Zapfwellen antreiben. Die Abtriebswelle kann zum insbesondere selektiven Antrieb von (Vorder-)Rädern des Fahrzeugs mit einem mechanischen Frontantrieb (kurz MFWD) verbunden sein. Vorzugsweise ist darüber hinaus wenigstens eine Zwischenwelle vorgesehen, wobei auch auf dieser insbesondere zur Erzeugung weiterer Schaltstufen Zahnräder und Schaltelemente vorgesehen sind.

Die Schaltelemente zur Auswahl der Schaltstufe können dabei auf der Eingangswelle, der Gänge auf der Zwischenwelle und/oder der Gruppe auf der Ausgangswelle angeordnet und/oder auf der Eingangswelle oder der Ausgangswelle ein weiteres Schaltelement zur Auswahl wenigstens eines Rückwährtsfahrtmodus vorgesehen sein.

Vorzugsweise ist wenigstens eines der Schaltelemente in der Art einer Lamellenkupplung mit wenigstens einem inneren Lamellenträger, einem äußeren Lamellenträger und einer Mehrzahl von Kupplungslamellen ausgebildet.

Sind die Zahnräder schrägverzahnt ausgebildet, so kann dies eine gleichmäßigere Übertragung des Drehmoments begünstigen. Darüber hinaus kann dies die Laufruhe des Lastschaltgetriebes verbessern und eine Geräuschentwicklung reduzieren.

Es ist vorteilhaft, wenn ein Fahrzeug wenigstens ein zuvor beschriebenes Lastschaltgetriebe aufweist. Auf diese Weise kann beispielsweise die Komplexität des Fahrzeugs reduziert, Bauraum gespart und/oder anderweitig genutzt und/oder das Fahrzeug kostengünstig hergestellt werden. Bei dem Fahrzeug handelt es sich insbesondere um ein landwirtschaftliches oder industrielles Arbeitsfahrzeug, vorzugsweise in der Art eines Ackerschleppers oder eines Traktors. Es kann sich bei dem Fahrzeug aber auch um ein Baufahrzeug, ein Transport-/Zugfahrzeug oder jedes andere geeignete Fahrzeug, insbesondere in der Art eines Nutzfahrzeug handeln.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Seitenansicht eines landwirtschaftlichen Fahrzeugs mit einem Antrieb und einem Lastschaltgetriebe,
- Fig. 2: eine Funktionsdarstellung des Lastschaltgetriebes als "stick-diagram",
- Fig. 3: das Lastschaltgetriebe in einer räumlichen Darstellung von rechts vorne.

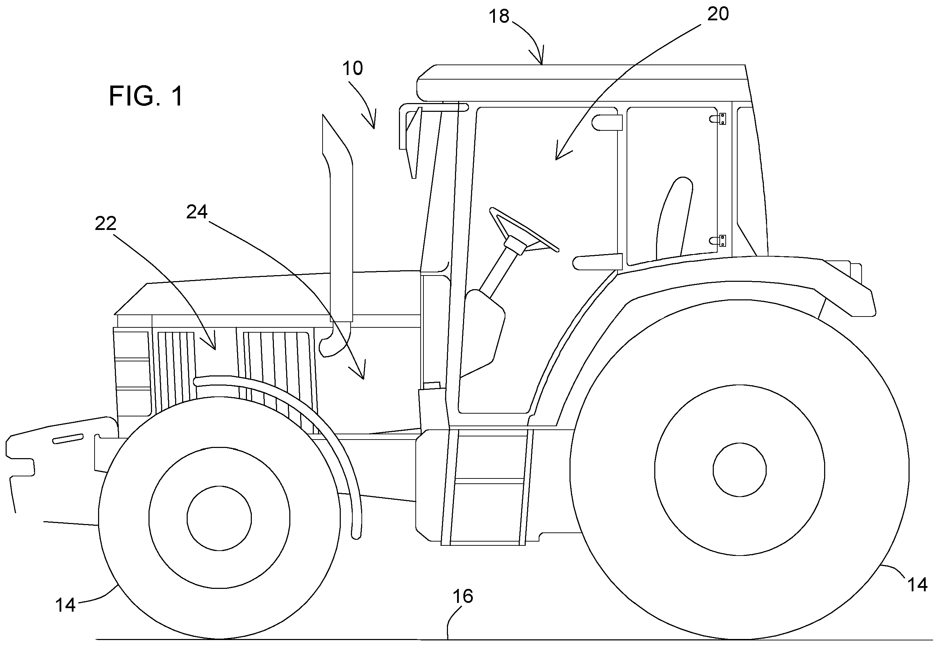

Die Figur 1 der Zeichnung zeigt ein landwirtschaftliches Fahrzeug 10 in der Art eines Ackerschleppers oder Traktors, das sich über vordere und rückwärtige Räder 14 auf dem Untergrund 16 abstützt. In einer Kabine 18 ist ein Bedienerarbeitsplatz 20 angeordnet. Das Fahrzeug 10 verfügt darüber hinaus über einen Antrieb 22 und ein Lastschaltgetriebe 24, auf das im Folgenden genauer eingegangen wird.

### Aufbau

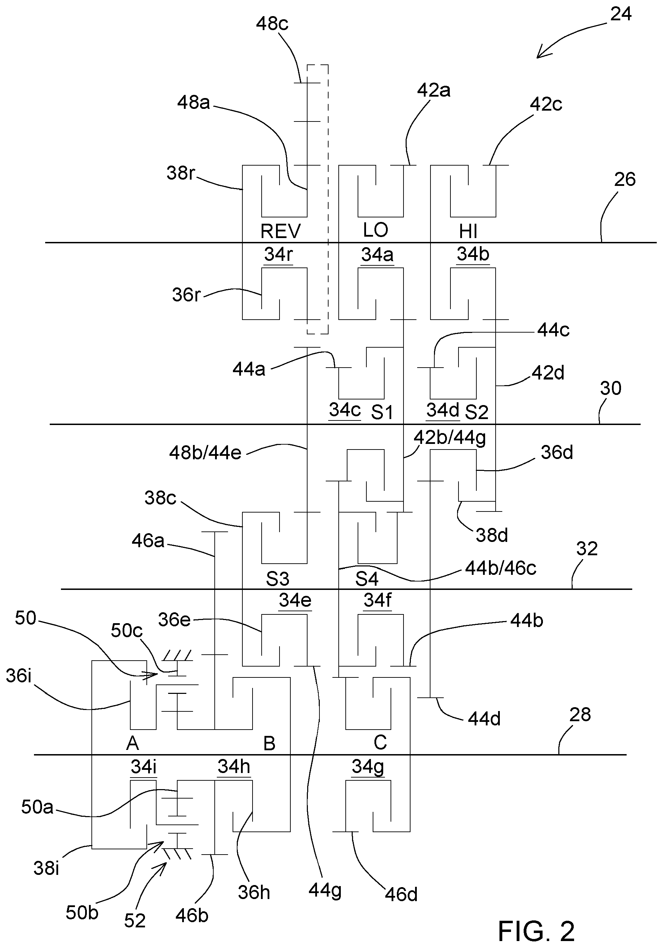

Gemäß dem in der Figur 2 vereinfacht zur Darstellung der Funktionsweise als sogenanntes stick-diagram gezeigten Ausführungsbeispiel weist das Lastschaltgetriebe 24, mehrere achsparallele Getriebewellen 26, 28, 30, 32 auf, die im Folgenden als Eingangswelle 26, Ausgangswelle 28 und Zwischenwellen 30 und 32 bezeichnet werden. Des weiteren sind Schaltelemente 34 a - i vorgesehen, wobei die Schaltelemente 34a, b zur Auswahl einer Schaltstufe in der Art eines Schnellgangs Hi und eines Kriechgang Lo, die Schaltelemente 34c - f zur Auswahl eines Gangs S1 - S4 und die Schaltelemente 34g - i zur Auswahl einer Gruppe A, B, C dienen. Darüber hinaus ist ein Schaltelement 34 r zum Schalten in einen Rückwärtsfahrtmodus REV vorgesehen.

Die Schaltelemente 34a, b sind auf der Eingangswelle, die Schaltelemente 34c, d auf der ersten Zwischenwelle 30, die Schaltelemente 34e, f auf der zweiten Zwischenwelle und die Schaltelemente 34g, h, und i auf der Ausgangswelle 28 angeordnet. Die Schaltelemente 34 a - i, r sind gemäß dem gezeigten Ausführungsbeispiel jeweils in der Art bekannter, hydraulisch betätigbarer Lamellenkupplungen mit einem inneren und einem äußeren Lamellenträger 36 a - i, r, 38 a - i, r und einer Vielzahl nicht dargestellter Kupplungslamellen ausgebildet. Die Schaltelemente 34 a-i, r werden durch eine ebenfalls nicht dargestellte Steuerungseinrichtung des Fahrzeugs 10 derart angesteuert, dass sie in bekannter Art und Weise mittels einer Beaufschlagung mit einem Hydraulikmittel gegen die Wirkung ebenfalls nicht gezeigter Federmittel geschlossen werden können, um eine Übertragung einer Drehung bzw. eines Drehmoments zu ermöglichen.

Darüber hinaus weist das Lastschaltgetriebe 24 eine Mehrzahl von Zahnrädern 42 a - d, 44 a - h und 46a - d auf, welche zur Erzielung von Übersetzungsstufen miteinander kämmen und in bekannter Art und Weise schrägverzahnt ausgebildet sind. Die Zahnräder 42a - c sind dabei den Schaltstufen Hi/Lo, die Zahnräder 44a - h den Gängen S1 - S4, die Zahnräder 46 a - c den Gruppen A, B, C und die Zahnräder 48 a - c dem Rückwärtsfahrtmodus REV zugeordnet. Die Zahnräder 42a/44g, 44e/48b, 44b/46c weisen eine doppelte Verwendung auf. Zur Verbesserung der Übersicht sind in der folgende Tabelle 1 die Zahnräder 42 a - d, 44 a - h, 46 a - d und 48 a - c mit ihrer jeweiligen Funktion aufgelistet.

**Tab. 1**

| | |
|---|---|
| 42 a | Lo Antriebszahnrad |
| 42 b | Lo Abtriebszahnrad * |
| 42 c | Hi Antriebszahnrad |
| 42 d | Hi Abtriebszahnrad |
| | |
| 44 a | S1 Antriebszahnrad |
| 44 b | S1 Abtriebszahnrad *** |
| 44 c | S2 Antriebszahnrad |
| 44 d | S2 Abtriebszahnrad |
| 44 e | S3 Antriebszahnrad |
| 44 f | S3 Abtriebszahnrad |
| 44 g | S4 Antriebszahnrad * |
| 44 h | S4 Abtriebszahnrad |
| | |
| 46 a | A/B Antriebszahnrad |
| 46 b | A/B Abtriebszahnrad |
| 46 c | C Antriebszahnrad *** |
| 46 d | C Abtriebszahnrad |
| | |
| 48a | REV Antriebszahnrad |
| 48b | REV Abtriebszahnrad ** |
| 48c | REV Freilaufzahnrad |

| | |
|---|---|
| * *42b und 44g doppelte Verwendung* * *44e und 48b doppelte Verwendung* *** *44b und 46c doppelte Verwendung* | |

Die Zahnräder 42a, c und 48a sind drehbar auf der Eingangswelle 26, die Zahnräder 44a, c drehbar auf der ersten Zwischenwelle 30, die Zahnräder 44g, h drehbar auf der zweiten Zwischenwelle 32 und die Zahnräder 46b, d auf der Ausgangswelle 28 drehbar gelagert, wobei alle diese Zahnräder 42a, c, 44a, c, g, k, 46b, c und 48r jeweils derart drehfest mit einem entsprechenden der inneren Lamellenträger 36a, b, c, d, e, f, g und 36r verbunden sind, dass sie mittels einem entsprechenden der Schaltelemente 34 a - g bzw. r jeweils drehfest mit der jeweiligen Getriebewelle 26, 28, 30, 32 verbindbar sind.

Die Zahnräder 42c, 44d, 44e/48b, 42b/44g, 44b/46c, 46a sind jeweils entsprechend drehfest mit einer der Zwischenwellen 30, 32 verbunden, wobei die Zahnräder 42c, 42b/44g, 44e/48b auf der ersten Zwischenwelle 30 und die Zahnräder 46a, 44b/46c und 44d auf der zweiten Zwischenwelle 32 vorgesehen sind.

Darüber hinaus ist ein Planetengetriebe 50 mit einem Sonnenrad 50a, einem Planetenradsatz 50b und einem Hohlrad 50c vorgesehen. Das Sonnenrad 50a des Planetengetriebes 50 ist frei drehbar auf der Ausgangswelle 28 gelagert und drehfest derart mit dem inneren Lamellenträger 36h des Schaltelements 34h verbunden, dass es mittels des Schaltelements 34h drehfest mit der Ausgangswelle 28 verbindbar ist. Der Planetenradsatz 50b kämmt mit dem Sonnenrad 50a und dem Hohlrad 50c und ist drehfest mit dem inneren Lamellenträger 36i des Schaltelements 34i verbunden, so dass er mittels des Schaltelements 34i drehfest mit der Ausgangswelle 28 verbindbar ist. Das Hohlrad 50c ist gemäß dem gezeigten Ausführungsbeispiel fest mit einem nur andeutungsweise gezeigten Gehäuse 52 des Lastschaltgetriebes 24 verbunden.

Das Zahnrad 42a der Schaltstufe Lo kämmt dabei mit dem Zahnrad 42b der Schaltstufe Lo, das Zahnrad 42c der Schaltstufe Hi mit dem Zahnrad 42d der Schaltstufe Hi, das Zahnrad 44a des Gangs S1 mit dem Zahnrad 44b des Gangs S1, das Zahnrad 44c des Gangs S2 mit dem Zahnrad 44d des Ganges S2, das Zahnrad 44e des Gangs S3 mit dem Zahnrad 44f des Gangs S3 und das Zahnrad 44g mit dem Zahnrad 44h des Gangs S4.

Das Zahnrad 46a der Gruppen A/B kämmt mit dem Zahnrad 46b der Gruppen A/B, das Zahnrad 46c der Gruppe C mit dem Zahnrad 46d der Gruppe C. Das Zahnrad 46b ist sowohl mit dem inneren Lamellenträger 36h des Schaltelements 34h der Gruppe B, als auch mit dem Sonnenrad 50a des Planetengetriebes 50 drehfest verbunden.

Es wird nun auch auf folgende Tabelle 2 Bezug genommen, die anhand eines Schaltdiagramms die durch das Lastschaltgetriebe 24 realisierbaren Fahrstufen, nämlich Vorwärtsgänge F01 - F23 und Rückwärtsgänge 01 - 12, aufzeigt. Es stehen insgesamt vierundzwanzig Vorwärtsgänge (Schaltstufe Hi, Lo x Gang S1 - S4 x Gruppe A, B, C / 2 x 4 x 3) zur Verfügung, wobei Gang F08 a/b zur Verbesserung des Schaltkomforts doppelt belegt ist. Darüber hinaus werden zwölf Rückwärtsgänge (Rückwärtsfahrtmodus REV x Gang S1 - S4 x Gruppe A, B, C / 1 x 4 x 3) zur Verfügung gestellt:

**Tab. 2**

| | Lo | Hi | Rev | S1 | S2 | S3 | S4 | A | B | C |
|---|---|---|---|---|---|---|---|---|---|---|
| F01 | x | | | x | | | | x | | |
| F02 | | x | | x | | | | x | | |
| F03 | x | | | | x | | | x | | |
| F04 | | x | | | x | | | x | | |
| FOS | x | | | | | x | | x | | |
| F06 | | x | | | | x | | x | | |
| F07 | x | | | | | | x | x | | |
| F08a | | x | | | | | x | x | | |
| F08b | x | | | x | | | | | x | |
| F09 | | x | | x | | | | | x | |
| F10 | x | | | | x | | | | x | |
| F11 | | x | | | x | | | | x | |
| F11 | x | | | | | x | | | x | |
| F13 | | x | | | | x | | | x | |
| F14 | x | | | | | | x | | x | |
| F15 | | x | | | | | x | | x | |
| F16 | x | | | x | | | | | | x |
| F17 | | x | | x | | | | | | x |
| F18 | x | | | | x | | | | | x |
| F19 | | x | | | x | | | | | x |
| F20 | x | | | | | x | | | | x |
| F21 | | x | | | | x | | | | x |
| F22 | x | | | | | | x | | | x |
| F23 | | x | | | | | x | | | x |
| R01 | | | x | x | | | | x | | |
| R02 | | | x | | x | | | x | | |
| R03 | | | x | | | x | | x | | |
| R04 | | | x | | | | x | x | | |
| R05 | | | x | x | | | | | x | |
| R06 | | | x | | x | | | | x | |
| R07 | | | x | | | x | | | x | |
| R08 | | | x | | | | x | | x | |
| R09 | | | x | x | | | | | | x |
| R10 | | | x | | x | | | | | x |
| R11 | | | x | | | x | | | | x |
| R12 | | | x | | | | x | | | x |

Ist beispielsweise die Schaltstufe Lo, der Gang S1 und die Gruppe A eingelegt, so wird das Zahnrad 42a der Schaltstufe Lo über das Schaltelement 34a der Stufe Lo mit der Eingangswelle 26 verbunden. Das Zahnrad 42a kämmt mit dem Zahnrad 42b der Schaltstufe Lo, welches über das Schaltelement 34e mit dem Zahnrad 44a drehfest verbunden wird, welches wiederum mit dem Zahnrad 44b des Gangs S1 kämmt, so dass dieses mit der Zwischenwelle 32 fest verbundene Zahnrad 44b des Gangs S1 die Zwischenwelle 32 und damit das ebenfalls mit ihr fest verbundene Zahnrad 46a in Rotation versetzt. Das Zahnrad 46a kämmt wiederum mit dem Zahnrad 46b, das sowohl mit dem inneren Lamellenträger des geöffneten Schaltelements 34h der Gruppe B als auch mit dem Sonnenrad 50a des Planetengetriebes 50 fest verbunden ist, so dass dieses den in dem stationären Hohlrad 50c umlaufenden Planetenträger 50b derart antreibt, dass dieser über das geschlossene Schaltelement 34i der Gruppe A die Abtriebswelle 28 in Rotation versetzt.

Wird statt der Gruppe B die Gruppe A gewählt, so verbindet das Schaltelement 34h das Zahnrad 46b über den inneren Lamellenträger 36h und den äußeren Lamellenträger 38h mit der Ausgangswelle 28.

Bei eingelegter Gruppe C wird das Zahnrad 46d über das Schaltelement 34g fest mit der Ausgangswelle 28 verbunden.

### Auslegung

Es soll nun auf die Auslegung insbesondere der Gruppen A, B, C bzw. ihrer Übersetzung eingegangen werden. In den folgenden Ausführungen bezeichnet der Begriff Getriebespreizung die Übersetzung eines Getriebes, das heißt den Unterschied zwischen der kleinsten und der größten Übersetzung. Die auf der Zeichnung rechts angeordnete Gruppe wird als erste Gruppe C, die mittlere als zweite Gruppe B und die links angeordnete als dritte Gruppe A bezeichnet.

Die Hauptspreizung bzw. die größte Spreizung des gezeigten Lastschaltgetriebes 24 wird im Bereich der Gruppen A, B, C dargestellt. Diese wird dann weiter unterteilt durch die vorgeschalteten Gänge S1 - S4, welche wiederum durch vorgeschaltete Schaltstufen Hi/Lo weiter unterteilt werden.

Die Spreizung für die gezeigten Gruppen A, B, C liegt im Bereich von ungefähr 9. Der Übersetzungssprung von der ersten Gruppe C zur zweiten Gruppe B sowie der Sprung von der zweiten Gruppe B zur dritten Gruppe A beträgt jeweils etwa 3, so dass bei einer Gesamtspreizung von etwa 9 eine ausgewogene Auslegung erzielt wird. Der Betrag des jeweiligen Übersetzungssprungs ergibt sich dabei als Wurzel der Gesamtspreizung der Gruppen A, B, C.

Um möglichst vorteilhafte Größen für die Zahnräder 46c, d der ersten Gruppe C vorzusehen, erfolgt zuerst eine gleichmäßige Verteilung der zweiten und der dritten Gruppe B. Wie zuvor wird die Übersetzung bzw. die Spreizung zwischen der ersten und der zweiten Gruppe A, B als Wurzel der Gesamtspreizung angenommen und beträgt somit etwa 1,7. Die zweite Gruppe B weist eine Übersetzung von 1,7 ins Langsame und die ersten Gruppe C von 1,7 ins Schnelle auf. Somit ist das Ausgangszahnrad 46b der zweiten Gruppe B nur etwa 1,7 mal größer als das Eingangszahnrad 46a der Gruppe B bzw. das Eingangszahnrad 46c der ersten Gruppe C nur 1,7 mal größer als das Ausgangszahnrad 46d ersten Gruppe C.

Um die gewünschte Spreizung der Gruppen von etwa 9 zu erhalten, erfolgt eine entsprechende Auslegung der dritten Gruppe A. Diese weist daher eine Gesamtübersetzung von 1,7 (Übersetzungssprung zwischen der zweiten Gruppe B und der dritten Gruppe A) * 3 = 5,1 auf.

Diese Übersetzung wird durch mehrere hintereinandergeschaltete Übersetzungen erzeugt, nämlich durch eine Kombination der Übersetzung der zweiten Stufe B (Übersetzung: 1,7) und des nachgeschalteten Planetengetriebes 50 (Übersetzung: 3).

Durch die Übersetzungsanpassung der zweite Gruppe B und der ersten Gruppe weist darüber hinaus das Zahnrad 46c (Abtriebszahnrad) der ersten Gruppe C die gleiche Größe wie das Zahnrad 44b (Abtriebszahnrad) des ersten Gangs S1 auf. Dies erlaubt eine Funktionsintegration bzw. ein Verschmelzen der beiden Zahnräder 44b/46c in einem Bauteil und damit eine Kosten- Bauraum- bzw. Gewichtsersparnis sowie eine Reduzierung der Massenträgheit.

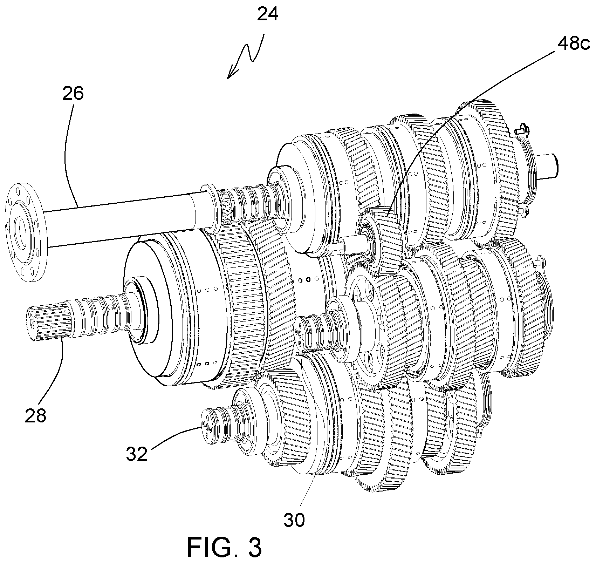

Abschließend wird zur Veranschaulichung der räumlichen Anordnung der Komponenten des Lastschaltgetriebes 24 nun auf die Figur 3 der Zeichnung Bezug genommen, die das Lastschaltgetriebe von rechts vorne zeigt. Hier wird deutlich, dass sich durch die zuvor beschriebene Ausgestaltung und Auslegung des Lastschaltgetriebes 24 eine besonders kompakte Bauform ergibt, die nur einen geringen Bauraum beansprucht.

### Wortliste

| | | | |
|---|---|---|---|
| 10 | Fahrzeug | 38 a - i, r | Lamellenträger, außen |
| 14 | Räder | 42 a - d | Zahnräder |
| 16 | Untergrund | 44 a - h | Zahnräder |
| 18 | Kabine | 46 a - d | Zahnräder |
| 20 | Bedienerarbeitsplatz | 48 a - c | Zahnräder |
| 22 | Antrieb | 50 | Planetengetriebe |
| 24 | Lastschaltgetriebe | 50a | Sonnenrad |
| 26 | Eingangswelle | 50b | Planetenradsatz |
| 28 | Ausgangswelle | 50c | Hohlrad |
| 30 | Zwischenwelle | 52 | Gehäuse |
| 32 | Zwischenwelle | | |
| 34 a - i, r | Schaltelemente | | |
| 36 a - i, r | Lamellenträger, innen | | |

## Patentansprüche

1. Lastschaltgetriebe (24) für ein Fahrzeug (10) mit mehreren achsparallelen Getriebewellen (26, 28, 30, 32), die zur Realisierung von Übersetzungsstufen jeweils Zahnräder (42a - d, 44a - h, 46a - d, 48a - c) und Schaltelemente (34a - i, r) tragen, wobei die Übersetzungsstufen drei Gruppen (A, B, C) und zumindest zwei Gänge (S1 - S4) umfassen, wobei eine erste und eine zweite Gruppe (B, C) eine betragsmäßig gleiche Übersetzung aufweisen, wobei die erste Gruppe (B) ins Schnelle und die zweite Gruppe (C) ins Langsame übersetzt ist, und eine dritte Gruppe (A) eine die Übersetzung der ersten beiden Gruppen (B, C) deutlich übersteigende Übersetzung aufweist, die mehrstufig umgesetzt wird, wobei die mehreren achsparallelen Getriebewellen eine Eingangs- und eine Ausgangswelle (26, 28) und eine erste und zweite Zwischenwelle (30, 32) umfassen, und die dritte Gruppe (A) ein Planetengetriebe (50) aufweist, derart, dass sich die Übersetzung der dritten Gruppe (A) aus einer Kombination der Übersetzung der ersten Gruppe (B) mit der Übersetzung des Planetengetriebes (50) ergibt, wobei die erste Gruppe (B) und die dritte Gruppe (A) ein gemeinsames frei drehbar auf der Ausgangswelle (28) angeordnetes Zahnrad (46b) aufweisen, wobei das frei drehbar auf der Ausgangswelle (28) angeordnetes Zahnrad (46b) mit einem Sonnenrad (50a) des darüber hinaus ein stationäres Hohlrad (50c) und einen Planetenträger (50b) aufweisenden Planetengetriebes (50) drehfest verbunden ist, und die Schaltelemente zur Auswahl der Gruppe (A, B, C) auf der Ausgangswelle (28) angeordnet sind, **dadurch gekennzeichnet, dass** das frei drehbar auf der Ausgangswelle (28) angeordnete Zahnrad (46b) mit der Ausgangswelle (28) selektiv über ein Schaltelement (34h) der ersten Gruppe (B) oder ein Schaltelement (34i) der dritten Gruppe (A) drehfest verbindbar ist.

2. Lastschaltgetriebe nach Anspruch 1, **dadurch gekennzeichnet, dass** die Gruppen (A, B, C) eine Spreizung von zumindest annähernd 9 aufweisen und/oder die erste und die zweite Gruppe (B, C) eine Übersetzung von jeweils etwa 1,7 bzw. eine Spreizung von etwa 3 und/oder die dritte Gruppe (A) eine Übersetzung von etwa 5,1 aufweist.

3. Lastschaltgetriebe nach einem der vorherigen Ansprüche, **dadurch gekennzeichnet, dass** insgesamt vier Gänge (S1 - S4) vorgesehen sind.

4. Lastschaltgetriebe nach Anspruch 3, **dadurch gekennzeichnet, dass** die Schaltelemente zur Auswahl der Gänge (S1 - S4) auf der Zwischenwelle (30, 32) angeordnet sind.

5. Lastschaltgetriebe nach Anspruch 3 oder 4, **dadurch gekennzeichnet, dass** zwei Schaltstufen (Lo, Hi) und/oder ein Rückwärtsfahrtmodus (REV) vorgesehen sind.

6. Lastschaltgetriebe nach Anspruch 5, **dadurch gekennzeichnet, dass** die Schaltelemente zur Auswahl der Schaltstufe auf der Eingangswelle (26) vorgesehen ist.

7. Lastschaltgetriebe nach einem der Ansprüche 3 bis 6, **dadurch gekennzeichnet, dass** ein Rückwärtsfahrtmodus (REV) vorgesehen sind.

8. Lastschaltgetriebe nach Anspruch 7, **dadurch gekennzeichnet, dass** auf der Eingangswelle (26) oder der Ausgangswelle (28) eine weiteres Schaltelement (34 r) zur Auswahl wenigstens eines Rückwärtsfahrtmodus (REV) vorgesehen ist.

9. Lastschaltgetriebe nach einem der vorherigen Ansprüche, **dadurch gekennzeichnet, dass** wenigstens eines der Schaltelemente (34a - i, r) in der Art einer Lamellenkupplung mit wenigstens einem inneren Lamellenträger (36a - i, r), einem äußeren Lamellenträger (38a - i, r) und einer Mehrzahl von Kupplungslamellen ausgebildet ist.

10. Lastschaltgetriebe nach einem der vorherigen Ansprüche, **dadurch gekennzeichnet, dass** die Zahnräder (42a - d, 44a - h, 46a - d, 48a - c) schrägverzahnt ausgebildet sind.

11. Fahrzeug (10) mit einem Lastschaltgetriebe (24) nach einem der vorherigen Ansprüche.

## Claims

1. Powershift transmission (24) for a vehicle (10), having a plurality of axially parallel transmission shafts (26, 28, 30, 32) which each bear gearwheels (42a - d, 44a - h, 46a - d, 48a - c) and shifting elements (34a - i, r) in order to implement transmission stages, the transmission stages comprising three groups (A, B, C) and at least two gears (S1 - S4), wherein a first and a second group (B, C) have an identical transmission ratio in absolute terms, the first group (B) being stepped up and the second group (C) being stepped down, and a third group (A) having a transmission ratio which significantly exceeds the transmission ratio of the first two groups (B, C) and is realized in multiple stages, wherein the plurality of axially parallel transmission shafts comprise an input shaft and an output shaft (26, 28) and a first and second intermediate shaft (30, 32), and the third group (A) has a planetary transmission (50) such that the transmission ratio of the third group (A) is produced from a combination of the transmission ratio of the first group (B) with the transmission ratio of the planetary transmission (50), wherein the first group (B) and the third group (A) have a common gearwheel (46b) which is arranged in a freely rotatable manner on the output shaft (28), wherein the gearwheel (46b) arranged in a freely rotatable manner on the output shaft (28) is connected, for conjoint rotation, to a sun gear (50a) of the planetary transmission (50), which furthermore has a stationary ring gear (50c) and a planet carrier (50b), and the shifting elements for selecting the group (A, B, C) are arranged on the output shaft (28), **characterized in that** the gearwheel (46b) arranged in a freely rotatable manner on the output shaft (28) is connectable, for conjoint rotation, to the output shaft (28) selectively via a shifting element (34h) of the first group (B) or a shifting element (34i) of the third group (A).

2. Powershift transmission according to Claim 1, **characterized in that** the groups (A, B, C) have a spread of at least approximately 9, and/or the first and the second group (B, C) have a transmission ratio of in each case approximately 1.7 or a spread of approximately 3, and/or the third group (A) has a transmission ratio of approximately 5.1.

3. Powershift transmission according to either of the preceding claims, **characterized in that** a total of four gears (S1 - S4) are provided.

4. Powershift transmission according to Claim 3, **characterized in that** the shifting elements for selecting the gears (S1 - S4) are arranged on the intermediate shaft (30, 32).

5. Powershift transmission according to Claim 3 or 4, **characterized in that** two shifting stages (Lo, Hi) and/or a reverse driving mode (REV) are provided.

6. Powershift transmission according to Claim 5, **characterized in that** the shifting elements for selecting the shifting stage are provided on the input shaft (26).

7. Powershift transmission according to any one of Claims 3 to 6, **characterized in that** a reverse driving mode (REV) is provided.

8. Powershift transmission according to Claim 7, **characterized in that** a further shifting element (34 r) for selecting at least one reverse driving mode (REV) is provided on the input shaft (26) or the output shaft (28).

9. Powershift transmission according to any one of the preceding claims, **characterized in that** at least one of the shifting elements (34a - i, r) is designed in the manner of a multi-plate clutch with at least one inner plate carrier (36a - i, r), an outer plate carrier (38a - i, r) and a plurality of clutch plates.

10. Powershift transmission according to any one of the preceding claims, **characterized in that** the gearwheels (42a - d, 44a - h, 46a - d, 48a - c) are helically toothed.

11. Vehicle (10) having a powershift transmission (24) according to any one of the preceding claims.

## Revendications

1. Boîte de vitesses commandée en charge (24) pour un véhicule (10) avec plusieurs arbres de transmission (26, 28, 30, 32) parallèles à l'axe, qui supportent chacun des roues dentées (42a-d, 44a-h, 46a-d, 48a-c) et des éléments de commutation (34a-i, r) pour la réalisation d'étages de transmission, les étages de transmission comprenant trois groupes (A, B, C) et au moins au moins deux vitesses (S1 - S4), un premier et un deuxième groupe (B, C) comportant un rapport de transmission égal en valeur, le premier groupe (B) étant surmultiplié et le deuxième groupe (C) étant démultiplié, et un troisième groupe (A) comportant un rapport de transmission nettement supérieur au rapport de transmission des deux premiers groupes (B, C), lequel est transformé en plusieurs étages, les plusieurs arbres de transmission parallèles à l'axe comprenant un arbre d'entrée et un arbre de sortie (26, 28) ainsi qu'un premier et un deuxième arbre intermédiaire (30, 32), et le troisième groupe (A) comportant un engrenage planétaire (50), de telle manière que le rapport de transmission du troisième groupe (A) résulte d'une combinaison entre le rapport de transmission du premier groupe (B) et le rapport de transmission de l'engrenage planétaire (50), le premier groupe (B) et le troisième groupe (A) comportant une roue dentée (46b) commune disposée sur l'arbre de sortie (28) de manière à pouvoir tourner librement, la roue dentée (46b) disposée sur l'arbre de sortie (28) de manière à pouvoir tourner librement étant reliée de manière solidaire en rotation à une roue solaire (50a) de l'engrenage planétaire (50) comportant par ailleurs une couronne stationnaire (50c) et une cage de transmission planétaire (50b), et les éléments de commutation étant disposés pour sélectionner le groupe (A, B, C) sur l'arbre de sortie (28), **caractérisée en ce que** la roue dentée (46b) disposée sur l'arbre de sortie (28) de manière à pouvoir tourner librement peut être reliée de manière solidaire en rotation à l'arbre de sortie (28) au choix par un élément de commutation (34h) du premier groupe (B) ou un élément de commutation (34i) du troisième groupe (A).

2. Boîte de vitesses commandée en charge selon la revendication 1, **caractérisée en ce que** les groupes (A, B, C) comportent un étalement d'au moins environ 9 et/ou le premier et le deuxième groupe (B, C) comportent un rapport de transmission d'environ 1,7 respectivement ou un étalement d'environ 3 et/ou le troisième groupe (A) comporte un rapport de transmission d'environ 5,1.

3. Boîte de vitesses commandée en charge selon l'une des revendications précédentes, **caractérisée en ce que** sont prévues au total quatre vitesses (S1 - S4).

4. Boîte de vitesses commandée en charge selon la revendication 3, **caractérisée en ce que** les éléments de commutation pour la sélection des vitesses (S1 - S4) sont disposés sur l'arbre intermédiaire (30, 32).

5. Boîte de vitesses commandée en charge selon la revendication 3 ou 4, **caractérisée en ce que** deux étages de commutation (Lo, Hi) et/ou un mode de marche arrière (REV) sont prévus.

6. Boîte de vitesses commandée en charge selon la revendication 5, **caractérisée en ce que** les éléments de commutation sont prévus sur l'arbre d'entrée (26) pour la sélection de l'étage de commutation.

7. Boîte de vitesses commandée en charge selon l'une des revendications 3 à 6, **caractérisée en ce qu'**un mode de marche arrière (REV) est prévu.

8. Boîte de vitesses commandée en charge selon la revendication 7, **caractérisée en ce qu'**un autre élément de commutation (34 r) est prévu sur l'arbre d'entrée (26) ou sur l'arbre de sortie (28) pour sélectionner au moins un mode de marche arrière (REV).

9. Boîte de vitesses commandée en charge selon l'une des revendications précédentes, **caractérisée en ce qu'**au moins un des éléments de commutation (34a - i, r) est formé à la manière d'un embrayage multidisque avec au moins un support multidisque intérieur (36a - i, r), un support multidisque extérieur (38a - i, r) et une multitude de disques d'embrayage.

10. Boîte de vitesses commandée en charge selon l'une des revendications précédentes, **caractérisée en ce que** les roues dentées (42a-d, 44a-h, 46a-d, 48a-c) sont formées avec une denture hélicoïdale.

11. Véhicule (10) avec une boîte de vitesses commandée en charge (24) selon l'une des revendications précédentes.
